# EUROPEAN PATENT APPLICATION

(11) **EP 1 903 323 A2**
(43) Date of publication of application: **26.03.2008**
(21) Application number: 06831910.2
(22) Date of filing: 30.05.2006
(51) Int. Cl.: G01M 11/06

(54) **METHOD OF TIMING HEADLAMPS OR LIGHTING PROJECTORS**

(30) Priority: 21.06.2005 ES 200501511
(71) Applicant: Seetech Sabadell S.C.P, 08206 Sabadell (ES)
(72) Inventor: SERRA CAMACHO, Juan, E-08206 Sabadell (ES); SERRA AMORÓS, JAN, E-08206 Sabadell (ES)
(74) Representative: Matamoron Hernandez, José Pedro
(86) International application number: PCT/IB2006/054405
(87) International publication number: WO 2007/039888

(57) **Abstract**

Comprises the following phases: in first phase a vehicle (1) is facing an obstacle (4), screen or wall defining a distance, in second phase is determined the type of headlamp or lighting projector and its space position in relation to the obstacle, screen or wall, automated or hand operated, in third phase the headlamp or lighting projector of the vehicle is turn on and its beam (3) is projected in the obstacle, screen or wall, defining a real drawing (5) of the beam, in fourth phase, according to the space position, the distance to the wall, screen or obstacle and the type of headlamp or lighting projector a processor defines a theoretical beam, and in fifth phase a first artificial viewer (10) takes data of the real drawing and transfers them to the processor which compares them with those of the theoretical drawing.

## Description

Method of timing headlamps or lighting projectors characterized in that it comprises the following phases: in a first phase a vehicle is facing an obstacle, screen or wall defining a distance between them, in a second phase is determined the type of headlamp or lighting projector and its space position in relation to the obstacle, screen or wall, being said determination automated or hand operated, in a third phase the headlamp or lighting projector of the vehicle is turn on and its beam is projected in the obstacle, screen or wall, defining a real drawing of the beam, in a fourth phase, according to the space position, the distance to the wall, screen or obstacle and the type of headlamp or lighting projector a processor defines a theoretical beam over said obstacle, screen or wall and in a fifth phase a first artificial viewer takes data of the real drawing and transfers them to the processor which compares said real drawing with the theoretical drawing of the beam of light.

It is intended for correctly adjust the orientation of the headlamps or lighting projectors of any vehicle.

### BACKGROUNDS OF THE INVENTION

In the current state of the art, the timing of the headlamps of the vehicles is performed in establishments that carry out their maintenance, by means of a moveable apparatus that comprises a lens system, reflectors and rulers of adjustable positions. Being situated in front of the vehicle with the lights turn on, is performed the observation of the shape and orientation of the lighting beams generated by the focus and its incidence in the apparatus followed by the indications given to a specialized operator that achieves the adjustment of the orientation of each one of the headlamps one after another.

This known system of timing headlamps has diverse drawbacks due to the assessment of the observed parameters by the specialized operators has a subjectivity element which can lead to different indications of diverse observers, and the need to take the vehicles to the said establishments to adequately achieve the headlamps timing.

Then it was needing a system to adjust the position of the headlamps of the vehicle eliminating the grade of subjectivity of the existing systems, in particular in the assembly lines, because are forced to use a lot of manual labour which slow down said assembly line and at the same time the final product gets dearer.

Therefore, it is know in the state of the art the European Patent n. 0705729 in the name of VALEO VISION that refers to an adjustment device of the orientation of a beam of light of a headlamp of a vehicle that comprises at least a reflector which contains three supports (a{sub,1}, a{sub,2}, a{sub,3}) in the vertex of a right-angle triangle, another one fixed (a{sub,1}) and two movable (a{sub,2},a{sub,3}) aligned vertically or horizontally with the fixed structure, comprising said device two drive elements, each having one end attached to the mobile mounting points for the lamp. A motor drive device is linked to at least one of the drive elements in order to advance or withdraw the element and consequently adjust the position of the reflector. According to the invention, the device comprises two axially fixed members which can be driven in rotation respectively around of two parallel axis by a driver and mounted over the two drive elements integral in rotation of said members and free in axial translation, linked the second drive element threaded with a moveable structure that is locked in rotation in such a way that the rotation of the members drives the translation of the two moveable supports to perform a first beam orientation and comprises other driving which drives in translation said moveable structure and as a result only an adjustable support to achieve a second orientation of the beam.

It is also known the European Patent n. 0828151 in the name of HELLA KG HUECK & CO, from the year 1997 which refers to a sighting device for aligning the optical axis of a mobile vehicle headlight testing apparatus to a vehicle longitudinal axis, having a sight arranged transverse to the optical axis, said sight being linked to the vehicle headlight testing apparatus and the sight is displaceable transverse to the optical axis in a horizontal plane. It also comprises a method for aligning the optical axis of a mobile vehicle headlight testing apparatus parallel to a vehicle longitudinal axis, whereby the vehicle headlight testing apparatus is positioned in front of a vehicle headlight and with a sight two points of a vehicle bodywork lying on a line running horizontally and perpendicular to the vehicle longitudinal axis and the sight is displaced transverse to the optical axis in a horizontal plane towards the vehicle longitudinal axis into a sighting position.

### BRIEF DESCRIPTION OF THE INVENTION

The inventor after numerous studies has proved that one of the great current drawbacks of the currently existing apparatuses that adjust the orientation of the lighting beams of the headlamps or lighting projectors of the vehicles is the great waste of time and money in the adjustment, being almost always necessary hand operated, so the speed is reduced and the time or the process period is increased, in particular in the assembly lines.

One of the more significant characteristic of the present invention is that the artificial viewer is not placed in front of the vehicle in order to not delay its motion. As it can be proved in the referred patents of the state of the art, the apparatus or device to adjust the headlamps is placed in front of the vehicle, delaying its motion, therefore once the timing is finished said device or apparatus should be removed to a great speed to allow the vehicle to move forward. In the present invention the artificial viewer can perfectly operate in a lateral or over the vehicle, in general at a point outer of the advance path of the vehicle, with not need to delay its advance.

Thus, the inventor has devised a method that allows a fast, economy and reliable timing system.

Therefore, in a first phase a vehicle which headlamps should be adjusted is facing an obstacle, screen or wall that will be in general perpendicular to the advance direction of the vehicle, although it is not completely necessary, defining as well a distance between them.

After that, in a second phase is determined the type of headlamp or lighting projector. Said determination can be achieved in many ways, or because the information is before known and the data are introduced in the processor or because the information appears in a code in the same vehicle, or because said information already appears in the said processor by means of an internal database, etc.

Likewise its space position is assessed, that is, its X, Y, Z coordinates and its position with respect to said obstacle, screen or wall, or what is the same, the distance of the X, Y, Z position of the headlamp with respect to its projection in the obstacle, screen or wall. The assessment of the position and the distance can be performed hand operated (for example, can be the solution for small repair shops) or automated (for example, in the assembly lines for big manufacturers).

In a third phase the headlamp or lighting projector of the vehicle is turn on and its beam is projected in the said obstacle, screen or wall, defining a real drawing of the beam of light or what is the same, the light that is reflected by the headlamps or projectors against the wall, screen or obstacle, defining a drawing that can be obtained in a empirical way, is defined as real.

In a fourth phase, according to the space position, the distance to the wall, screen or obstacle and the type of headlamp or lighting projector a processor defines a theoretical beam over the said obstacle, screen or wall. It means, according to the data of the processor, theoretically defines the drawing that it should have if the headlamp or lighting projector were correctly adjusted.

In a fifth phase a first artificial viewer takes data of the real drawing and transfers them to the processor which compares said real drawing with the theoretical drawing of the beam of light, or what is the same, analyzes the differences between the theoretical drawing and the practical drawing, being said difference if it were not in the tolerance rate, a cause for the timing the headlamp or lighting projector. Even if a headlamp has the appropriate tolerances in the fabric will be adjusted as well.

Also it would be possible that in the fourth phase the processor in view of the space position, the distance to the wall, screen or obstacle and the type of headlamp or lighting projector, defines the hinging point of the theoretical beam of light over the said obstacle, screen or wall.

In the fifth phase the first artificial viewer takes information concerning the real drawing and transfers it to the processor which reduces the data only to the comparison of the hinging point of the real drawing with the hinging point of the theoretical drawing of the beam of light obtained in the fourth phase. The inventor has proved that in the most of the headlamps of lighting projectors to find the position of the hinging point can be enough to know if the headlamp should be adjusted or not.

If the timing of the headlamp were necessary, a sixth phase is incorporated where the headlamp or lighting projector is adjusted to match the real drawing with the theoretical drawing. Said adjustment of the headlamp or lighting projector can be hand operated by the operator or automated by a robot.

The referred artificial viewer could also be positioned in the space in such a way that it can state de centre of inertia of the headlamp or lighting projector, in general above or under the headlamp or lighting projector in order to prevent dazzling. Once it has found the centre of inertia transmits said information to the processor, being placed subsequently said first artificial viewer faced in relation to the obstacle, screen or wall, so that it can view the whole real drawing or a part of the real drawing which has been previously marked (for example, bounded to a certain area around the hinging point). That is to say, the same artificial viewer finds the centre of inertia and later, rotating in its axis gets placed at the suitable height to view the real drawing and sends said information to the processor. The advantage is that it does two functions (to find the centre of inertia and obtain the data of the real drawing) with the same artificial viewer.

Also the above explained can be achieved with two artificial viewers, one of them reading in the centre of inertia of the headlamp and the other one faced to the obstacle, screen or wall, so that the second artificial viewer which is reading the centre of inertia gets placed in the suitable position to view the centre of inertia and finds its position in relation to the three axis of the space. The first artificial viewer which is faced to the obstacle, screen or wall, will be placed to the same height of the centre of inertia, focusing on the obstacle, screen or wall in the respective projection of the mentioned centre of inertia.

The said artificial viewer can be, for example, but not limitative, an artificial reader, a laser, an electronic ruler or a video camera, etc.

The determination of the model, vehicle series or headlamp can be also achieved by means of a bar code located in the vehicle, being said bar code read by a reader that sends the data to the processor that manages them.

### BRIEF DESCRIPTION OF THE DRAWINGS

With the purpose to facilitate the explanation three sheets of drawings are attached to the present description, in which a practical case of an embodiment has been reproduced, which is mentioned only for exemplificative, non limitative of the scope of the present invention:
- Figure 1 is a view from the vehicle in the timing headlamps area,
- Figure 2 is a view in detail of the projection of the beams of light of the headlamps on a obstacle, and
- Figure 3 is a view of the timing of the headlamps by an operator.

### PREFERRED EMBODIMENT OF THE PATENT APPLICATION

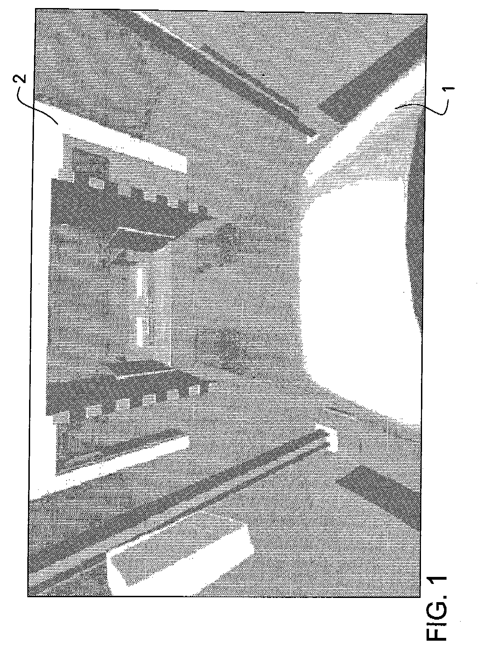

Thus, in the Figure 1 is shown the vehicle or car 1 and a tunnel 2.

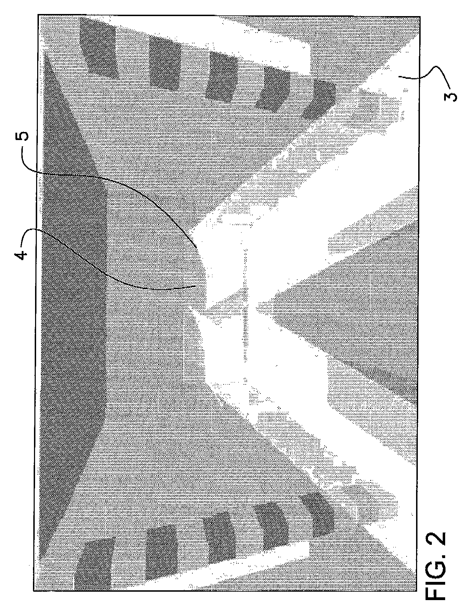

In Figure 2 is shown the beam of light 3, its real image 5 and a obstacle 4.

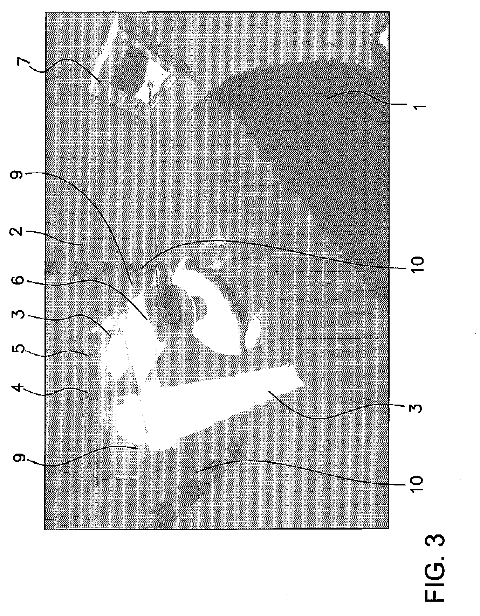

Lastly, in the Figure 3 is shown the vehicle 1, the structure 2, the beam of light 3, its real image 5, the obstacle 4, and operator 6, a screen 7 for visualization of the timing and a camera 10.

In a previous phase the vehicle 1 is placed over a roller bench known itself, not shown in the drawings. The roller bench allows that the vehicle stays always immobilized in the same manner and the axis of its wheels stays parallel to the obstacle 4 where the beams of light 3 of the vehicle 1 will be projected. In this preferred embodiment the obstacle 4 will stay perpendicular to the advance direction of the vehicle.

Owing to production optimization, in this preferred embodiment it is considered the suitable placement of the apparatuses and means for the adjustment of the headlamps in front of the alignment bench (roller bench) for the reason that in the production lines the adjustment time of the alignment is always higher than the headlamps adjustment time.

In order to optimize the time is taken the opportunity that the vehicle 1 is immobilized and faced to the obstacle 4 in order to an operator 6 adjusts the headlamps while other one corrects the direction.

The vehicle 1 can arrives to the roller bench in many ways, for example, when an operator 6 drives the vehicle 1 until it is placed over the roller bench, after that, when a processor detects that a vehicle is over the roller bench, transmits instructions to centre it and immobilize it; when the vehicle arrives to the area pushed by an automatic system of assembly line and the processor when detects it in the roller bench immobilize it, etc.

Therefore, in a first phase the vehicle 1 stays faced to an obstacle 4, screen or wall defining a distance between them which in the assembly lines or in the roller benches can be always constant, as a result said variable will be always the same in this kind of installations, although in places like small repair shops where go into different cars of various sizes will be necessary to calculate it previously either automatic or hand operated.

In a second phase is determined the type of headlamp or lighting projector and its space position in relation to said obstacle 4, screen or wall, being said determination automated or hand operated. Said first and second phases can be achieved at the same time.

In this embodiment for an assembly line, said determination can be performed in the following ways, by a connected central system that transmits information about which vehicle 1 is in the roller bench in that moment, or an operator 6 by means of a keyboard and a selection list chooses the vehicle to adjust, or an operator by means of a bar code reader gun, reads a code in the vehicle that identifies the model, or a bar code reader gun fixed to a constant reader support that reads the code when this is under the reader gun, that is when the vehicle 1 is placed over the bench because the codes are placed always in the same place, etc.

In a third phase the headlamp or lighting projector of the vehicle is turn on and its beam of light 3 is projected in the said obstacle 4, screen or wall, defining a real drawing 5 of the beam of light.

In a fourth phase, according to the space position of the vehicle 1, the distance in relation to the wall, screen or obstacle 4 and the type of headlamp or lighting projector a processor defines a theoretical beam over said obstacle, screen or wall.

In a fifth phase (Figure 3) a first artificial viewer 10 which can be placed raising or lowering, depending on the case can be a movement to different directions in the space) in the tunnel 2 depending on the model and type of vehicle 1 obtains data of the real drawing 5 and transfers them to the processor (not shown in the drawings) which compares said real drawing 5 with the theoretical drawing of the beam of light before obtained, in this way the processor can determinate if there is or not a variation between the real drawing of the beam of light 5 and the tolerance ranges according to the traffic regulations itself or those of the manufacturer, theoretical drawing of the beam of light.

If in an assembly line the same vehicle model and with the same type of headlamp is adjusted in the same tunnel 2, the first artificial viewer 2 could be located in a fixed manner, facing towards the obstacle 4.

It would be possible to optimize the fourth phase in the following manner. It is possible that in the fourth phase according to the space position of the vehicle 1, distance in relation to the wall, screen or obstacle 4 and the type of headlamp or lighting projector, a processor defines the hinging point of the theoretical beam of light over the said obstacle 4, screen or wall and in the fifth phase the first artificial viewer 10 obtains an information related to the real drawing 5 and transfers it to the processor that reduces the data only to the comparison of the hinging point of the real drawing 5 with the hinging point of the theoretical drawing of the beam of light obtained in the fourth phase. This is very useful because it is allowed to increase the speed of the process, in particular in the production lines since the visual and comparison field is reduced, being thus not necessary to use so many variables, allowing a faster speed of the processor.

The said artificial viewer 10, as in the present invention, can be located in a point in the outside of the advance path of the vehicle, or integrated in the structure 2, but always out of the advance path of the vehicle.

In the sixth phase the headlamp or lighting projector is adjusted to match the real drawing 5 with the theoretical drawing. In this embodiment said adjustment of the headlamp or lighting projector can be hand operated by an operator 6 or also can be achieved in an automatic manner.

Thus, in the manually manner, there will be two screens 7 located in two masts of the tunnel 2 where the operator 6 could observe at the time he is adjusting the headlamps in order to see the advance of the adjustment.

The operator 6 by means of automatic screwdrivers will insert them in the adjusters of the headlamp and will observe the screens 7 until the timing of the real beam of light 5 matches with the theoretical. If he is adjusting the left headlamp will observe the left screen and if he is adjusting the right headlamp will observe the right screen.

This is important because there is an adjustment order, first a headlamp is adjusted and then the other. Depending on the necessities of the production and the type of installation the right headlamp could be first adjusted and the left headlamp next. To ensure that the operator does not get wrong in the order in the screen of the headlamp, some kind of messages can be created to warn in the screen the headlamp to be adjusted.

After the adjustment of the both headlamps, the vehicle 1 will be free to move and the obstacle 4 of the tunnel 2 will open to permit to the vehicle 1 to move across. Said release is performed by means of a signal transmitted either by the processor or the operator which indicates that the adjustment of the headlamp is ready and therefore the vehicle can be released.

There is the possibility that the said first artificial viewer 10 be located in the space in such a way that it could determines the centre of inertia of the headlamp or lighting projector, transmitting said information to the processor, being next located said artificial viewer 10 faced in relation to the obstacle, screen or wall, rotating said artificial viewer about an axis that supports it and establishing to the appropriated height for the observation of the real drawing 5, transmitting the information of said real drawing 5 to the processor for management. This is one of the accomplishments intended for a repair shop, where always are different models of vehicles, therefore the height of the artificial viewer 10 must be adjusted to the model of the car and headlamp.

Another option to prevent the rotation of the camera or artificial viewer 10, because it is for example in an assembly line with different models of cars adjusting the headlamps at once, involves the adding of a second artificial viewer (not shown in the drawings) to directly determine the centre of inertia of the headlamp or lighting projector, transmitting said information to the processor which according to the obstacle 4, screen or wall locates the first artificial viewer 10 in accordance with the centre of inertia position.

The artificial viewers 10 can be of different types, in this embodiment has been mentioned either a laser or a video camera, although also it could be an artificial reader, electronic ruler, etc.

Some artificial viewers could be added in a position in order to focus the different lighting elements of the car with the intention that the same operator 6 that is adjusting the headlamps of the car or other could test them. Thus, for example the processor will show to the operator 6, in the screen 7, the routines to follow to check that said lighting elements of the vehicle 1 are correctly working, as for example, the test the working of the brake lights, of the reverse light, of the direction indicators. This possibility could be used without the adjustment of the headlamp by the operator, for technical inspection stations of vehicles where the operator would be replaced by the own driver and where it is not necessary to adjust the headlamp in said installation but to detect that the same is out of the tolerance ranges being later adjusted in a workshop.

One of the different manners to determine the model, the vehicle or headlamp series to adjust could be by means of a bar code with a reader which manages them.

This method is very useful because of its versatility since it can be adapted to small workshops, assembly lines or technical inspection stations where its interest is the knowledge that if the light is adjusted into the legal parameters or not, to allow the free circulation of the vehicle in transit, therefore, in this concrete case, the fifth phase is the last one because the other phases are not part of the object of the technical inspections of vehicles.

The present invention describes a novel method of timing headlamps or lighting projectors. The examples here mentioned are not limitative of the present invention, for that reason it will be able to have different applications and/or be adapted, all of them within the scope of the following claims.

## Claims

1. Method of timing headlamps or lighting projectors **characterized in that** it comprises the following phases:
- in a first phase a vehicle (1) is facing an obstacle (4), screen or wall defining a distance between them,
- in a second phase is determined the type of headlamp or lighting projector and its space position in relation to said obstacle (4), screen or wall, being said determination automated or hand operated,
- in a third phase the headlamp or lighting projector of the vehicle is turn on and its beam of light (3) is projected in the said obstacle (4), screen or wall, defining a real drawing (5) of the beam of light
- in a fourth phase, according to the space position, the distance to the wall, screen or obstacle (4) and the type of headlamp or lighting projector a processor defines a theoretical beam over said obstacle (4), screen or wall
- In a fifth phase a first artificial viewer (10) takes data of the real drawing (5) and transfers them to the processor which compares said real drawing (5) with the theoretical drawing of the beam of light.

2. Method according to claim 1 **characterized in that** in the fourth phase according to the space position, the distance to the wall, screen or obstacle (4) and the type of headlamp or lighting projector the processor defines the hinging point of the theoretical beam of light over the said obstacle, screen or wall and in the fifth phase the first artificial viewer (10) obtains an information related to the real drawing (5) and transfers it to the processor that reduces the data only to the comparison of the hinging point of the real drawing with the hinging point of the theoretical drawing of the beam of light obtained in the fourth phase.

3. Method according to claim 1 or 2 **characterized in that** the artificial viewer (10) can be placed in a point in the outside of the advance path of the vehicle.

4. Method according to claim 1 or 2 or 3 **characterized in that** there is incorporated a sixth phase where the headlamp or lighting projector is adjusted to match the real drawing (5) with the theoretical drawing.

5. Method according to claim 4 **characterized in that** said adjustment of the headlamp or lighting projector is hand operated.

6. Method according to claim 4 **characterized in that** the said headlamp or lighting projector adjustment is achieved in an automatic manner.

7. Method according to claim 1 or 2 or 3 **characterized in that** said first artificial viewer (10) is located in the space in such a way that it can state de centre of inertia of the headlamp or lighting projector, transmitting said information to the processor, being placed subsequently said first artificial viewer (10) faced in relation to the obstacle (4), screen or wall, rotating said artificial viewer about an axis that supports it and establishing to the appropriated height for the observation of the real drawing (5), transmitting the information of said real drawing to the processor for management.

8. Method according to at least one of the previous claims **characterized in that** comprises a second artificial viewer which determines the centre of inertia of the headlamp or lighting projector, transmitting said information to the processor which according to the obstacle (4), screen or wall locates the first artificial viewer (10) in accordance with the centre of inertia position,

9. Method according to any of the previous claims **characterized in that** the said artificial viewer (10) is an artificial reader.

10. Method according to any of the previous claims from 1 to 8 **characterized in that** the mentioned artificial viewer (10) is a laser.

11. Method according to any of the previous claims from 1 to 8 **characterized in that** the mentioned artificial viewer (10) is a electronic ruler.

12. Method according to any of the previous claims from 1 to 8 **characterized in that** the mentioned artificial viewer (10) is a video camera.

13. Method according to any of the previous claims from 1 to 8 **characterized in that** the determination of the model, vehicle series or headlamp to be adjusted can be performed by means of a bar code located in the vehicle (1), being said bar code read by a reader that sends the data to the processor.
